# EUROPÄISCHE PATENTANMELDUNG

(11) **EP 3 438 901 A1**
(43) Veröffentlichungstag der Anmeldung: **06.02.2019**
(21) Anmeldenummer: 18186851.4
(22) Anmeldetag: 01.08.2018
(51) Int. Cl.: G06Q 10/08, G06Q 50/10, G09B 9/00

(54) **TESTFAHRTSZENARIO-DATENBANKSYSTEM FÜR REALITÄTSNAHE VIRTUELLE TESTFAHRTSZENARIEN**

(30) Priorität: 01.08.2017 DE 102017213217
(71) Anmelder: Ford Global Technologies, LLC, Dearborn, MI 48126 (US)
(72) Erfinder: Stefan, Frederic, 52072 Aachen (DE); Chevalier, Alain, 4841 Henri-Chapelle (BE); Marbaix, Michael, 5351 Haillot (BE); Bitsanis, Evangelos, 52062 Aachen (DE)
(74) Vertreter: Dörfler, Thomas

(57) **Zusammenfassung**

Testfahrtszenario-Datenbanksystem (10) für realitätsnahe virtuelle Testfahrtszenarien, umfassend zumindest eine Vorrichtung (11) zum Darstellen einer virtuellen Szene, einen Datenbankspeicher (12) und eine Steuervorrichtung (13). Diese weist zumindest eine Datenempfangseinheit (14) mit einer oder mehreren Datenempfangsschnittstellen (15), eine Konfigurationseinheit (18) mit zumindest einer Benutzer-Schnittstelle (19) und eine Datenausgabeeinheit (20) mit zumindest einer Datenausgabeschnittstelle (21) auf. Die Datenempfangseinheit (14) ist dazu eingerichtet, Testfahrtszenario-Daten von einer Mehrzahl von realen Testfahrten zumindest eines ersten Testfahrzeugs (16), das zumindest eine erste zu testende Fahrzeugkomponente (17) aufweist, zu empfangen und in dem Datenbankspeicher (12) zu speichern. Die Konfigurationseinheit (18) ist dazu eingerichtet, dass über diese ein Benutzer des Testfahrtszenario-Datenbanksystems (10) zu Testfahrtszenario-Daten von zumindest einem Teil von zumindest einer der Mehrzahl von realen Testfahrten zumindest eine Annotation hinzufügen kann.

## Beschreibung

Die vorliegende Erfindung betrifft ein Testfahrtszenario-Datenbanksystem für realitätsnahe virtuelle Testfahrtszenarien. Zudem betrifft die vorliegende Erfindung ein Verfahren zum Untersuchen von Testfahrten mit einem derartigen Testfahrtszenario-Datenbanksystem.

Virtuelle Welten sind computergenerierte, zumeist dreidimensional dargestellte Umgebungen und vermitteln dem Benutzer beispielsweise durch Interaktionsmöglichkeiten mit der virtuellen Umgebung den Eindruck, dass dieser darin beispielsweise seine Blickrichtung auf dargestellte Objekte ändern oder seinen Standpunkt verändern und sich darin "bewegen" kann.

Virtuelle Umgebungen werden beispielsweise in der Computerspiele-Industrie, aber auch als Hilfsmittel bei Produktdesign und -entwicklung eingesetzt, wo der Entwickler beispielsweise mit einem virtuellen Modell einen Entwurf für ein tatsächlich zu fertigendes Produkt anpassen und testen kann.

Auch von realen Szenen bzw. Szenarien stehen unter Umständen genug Informationen zur Verfügung, um darauf basierend ein virtuelles Szenario als Modell des realen Szenarios zu generieren, das die real ermittelten Daten entsprechend wirklichkeitsnah abbildet.

Beispielsweise ist es in der US 2010/0030540 vorgesehen, zur Rekonstruktion eines Verkehrsunfalls eine dreidimensionale Unfall-Umgebung unter Verwendung von Positionsdaten, geographischen Daten und Wetterdaten zu erzeugen, die von einer Blackbox des Fahrzeugs aufgezeichneten Fahrzeugdaten, den Zustand des Fahrers betreffende Daten, ggf. Daten von Sensoren an der Straße und die geographischen Informationen in der Szene darzustellen, sowie andere, für den Unfall relevante Objekte wie Fahrzeuge in der Nähe, Fußgänger und Ampeln in der Szene darzustellen.

Auch die Entwicklung und Verbesserung von Fahrzeugen und Fahrzeug-komponenten kann von deren Test in einer realitätsnahen virtuellen Umgebung profitieren, indem reale Testfahrten in einer virtuellen Umgebung ausgewertet werden und beispielsweise an die real zu Tage getretenen Probleme angepasste Versuchsreihen mit virtuellen Testfahrten durchgeführt werden können.

Insbesondere mit der Entwicklung autonomer und miteinander in Kommunikation stehender Fahrzeuge ist der Bedarf an zuverlässigen Tests und Simulationen gestiegen, um alle Eventualitäten komplexer Verkehrs-situationen zu berücksichtigen und das Verhalten neuer Fahrzeugkomponenten, beispielsweise von Steuerungssoftware für ein autonomes, also ohne Fahrer selbst fahrendes Fahrzeug darauf abzustimmen. So kann es beispielsweise wichtig sein, zu erfassen, unter welchen Umgebungsbedingungen ein bestimmtes Verhalten der Steuerungssoftware aufgetreten ist und warum beispielsweise eine Verkehrssituation unangemessen beurteilt wurde oder warum trotz richtiger Einschätzung dennoch eine kritische Situation entstand.

Um die real auftretenden Probleme ausreichend eingrenzen und Ursachen erkennen zu können, ist es in der Regel erforderlich, auch komplexe Zusammenhänge, Interaktionen und den Einfluss verschiedener Komponenten des jeweiligen Testfahrtszenarios auf einander zu erfassen, was mit der Analyse einzelner Testfahrten nur eingeschränkt möglich ist.

Es ist eine Aufgabe der vorliegenden Erfindung, eine Möglichkeit zur Verfügung zu stellen, mit der in einfacher Weise aus verschiedenen realen Testfahrten generierbare verschiedene möglichst realitätsnahe virtuelle Testfahrtszenarien ausgewertet werden können.

Diese Aufgabe wird erfindungsgemäß mit einem Testfahrtszenario-Datenbanksystem für realitätsnahe virtuelle Testfahrtszenarien nach Anspruch 1 sowie einem Verfahren zum Untersuchen von Testfahrten mit einem Testfahrtszenario-Datenbanksystem nach Anspruch 14 gelöst. Vorteilhafte Weiterbildungen der Erfindung sind in den Unteransprüchen angegeben.

Gemäß einem Aspekt der Erfindung umfasst das erfindungsgemäße Testfahrtszenario-Datenbanksystem für realitätsnahe virtuelle Testfahrt-szenarien zumindest eine Vorrichtung zum Darstellen einer virtuellen Szene, einen Datenbankspeicher und eine Steuervorrichtung. Diese weist zumindest eine Datenempfangseinheit mit einer oder mehreren Datenempfangsschnittstellen, eine Konfigurationseinheit mit zumindest einer Benutzer-Schnittstelle und eine Datenausgabeeinheit mit zumindest einer Datenausgabeschnittstelle auf. Die Datenempfangseinheit ist dazu eingerichtet, Testfahrtszenario-Daten von einer Mehrzahl von realen Testfahrten zumindest eines ersten Testfahrzeugs, das zumindest eine erste zu testende Fahrzeugkomponente aufweist, zu empfangen und in dem Datenbankspeicher zu speichern. Die Konfigurationseinheit ist dazu eingerichtet, dass über diese ein Benutzer des Testfahrtszenario-Datenbanksystems zu Testfahrtszenario-Daten von zumindest einem Teil von zumindest einer der Mehrzahl von realen Testfahrten zumindest eine Annotation hinzufügen kann. Und die Datenausgabeeinheit ist dazu eingerichtet, Testfahrtszenario-Daten von zumindest dem Teil der zumindest einen von der Mehrzahl von realen Testfahrten, zu dem die Annotation hinzugefügt wurde, an die Vorrichtung zum Darstellen einer virtuellen Szene auszugeben, wobei die Vorrichtung zum Darstellen einer virtuellen Szene dazu eingerichtet ist, die ausgegebenen Testfahrtszenario-Daten in einem virtuellen Szenario darzustellen, in dem einer oder mehrere Parameter der ausgegebenen Testfahrtszenario-Daten verändert werden können.

Eine reale Testfahrt, im Gegensatz zu einer virtuellen Testfahrt, wird mit einem realen Testfahrzeug, d.h. nicht mit der virtuellen Repräsentation eines Testfahrzeugs, durchgeführt, so dass die aufgenommenen Testfahrtszenario-Daten Werte realer Parameter des Testfahrzeugs, beispielsweise dessen geographische Position, Geschwindigkeit etc., und beispielsweise Parameter des Fahrers, der Umgebung des Testfahrzeugs, anderer Fahrzeuge und anderer Verkehrsteilnehmer betreffen.

Ein Testfahrzeug ist ein von einem Fahrer gesteuertes oder autonom fahrendes Fahrzeug, das zumindest eine zu testende Fahrzeugkomponente aufweist. Dies schließt mit ein, dass eine bauliche Ergänzung oder Veränderung, aber auch eine Änderung einer Steuerungs- oder Betriebssoftware oder eines Betriebsablaufs oder auch das gesamte Fahrzeug getestet wird, einschließlich beispielsweise auch eines Tests des Fahrzeugs für bestimmte Benutzergruppen oder in bestimmten Testumgebungen. Das Testfahrzeug ist mit dem Datenbanksystem drahtlos oder drahtgebunden verbunden bzw. verbindbar. In einer Ausführungsform ist es eine mobile Komponente des Systems bzw. ist ein Teil des Systems.

Die Steuervorrichtung ermöglicht unter anderem die drahtlose oder drahtgebundene Kommunikation zwischen den Datenquellen, beispielsweise dem ersten Testfahrzeug und Umgebungsinformationsdatenbanken, dem Datenbankspeicher des Testfahrtszenario-Datenbanksystems und der Vorrichtung zum Darstellen einer virtuellen Szene. Vorzugsweise sind hierzu alle Komponenten des Systems entweder drahtgebunden oder drahtlos, beispielsweise über ein 3G,- 4G-, 5G- oder einer anderen Generation zugehöriges Mobilfunknetz, miteinander kommunikativ verbunden und befinden sich beispielsweise in derselben Daten-Cloud bzw. sind über ein Datennetz miteinander verbunden.

Ein Testfahrtszenario-Datenbanksystem umfasst den Datenbankspeicher, beispielsweise als nichtflüchtiger Speicher oder Speichermöglichkeit in einer Cloud, auf die die Steuervorrichtung zugreifen kann, sowie die Vorrichtung zum Darstellen, d.h. zum Erzeugen und Rendern, einer virtuellen Szene, bei der es sich beispielsweise um eine programmierbare Vorrichtung mit einer Ausgabeeinrichtung, z.B. einem Bildschirm oder einem Head-Mounted-Display, handelt, die von der Datenausgabeeinheit der Steuervorrichtung die Testfahrtszenario-Daten empfängt, die vom Benutzer zur Anzeige ausgewählt wurden. Bei der Steuervorrichtung handelt es sich ebenfalls um eine programmierbare Vorrichtung mit einem Prozessor und einem Speicher. In einer Ausführungsform ist es vorgesehen, dass die Steuervorrichtung und die Vorrichtung zum Darstellen einer virtuellen Szene als eine gemeinsame Vorrichtung realisiert sind.

Die Auswahl der Testfahrtszenario-Daten zur Übergabe an die Vorrichtung zum Darstellen einer virtuellen Szene erfolgt, indem der Benutzer, beispielsweise ein Entwicklungsingenieur, über die Benutzerschnittstelle der Konfigurationseinheit, die beispielsweise eine graphische Benutzeroberfläche sein kann, zumindest einen Teil der Testfahrtszenario-Daten von zumindest einer der Testfahrten annotiert, d.h. zumindest eine Markierung hinzufügt und so zur Anzeige auswählt. Beispielsweise kann vorgesehen sein, eine Zeitspanne innerhalb der aufgezeichneten Testfahrt zur Anzeige auszuwählen.

In einer Ausführungsform ist es vorgesehen, bei der Annotation ausgewählte Teile der Testfahrtszenario-Daten als separate Datensätze zu speichen. Auf diese Weise lassen sich beispielsweise Testfahrtszenario-Datensätze zu speziellen Szenarios, z.B. zu untersuchenden, bisher nicht ausreichend berücksichtigten Verkehrssituationen oder Situationen, in denen sich das Testfahrzeug anders als erwartet benommen hat, die zu einer kritischen Situation geführt haben oder die während des Entwicklungsprozesses bisher nicht ausreichend berücksichtigt worden sind, in eigenen Datenbänken bzw. Datenbankbereichen zur Analyse zusammenstellen.

In einer weiteren Ausführungsform ist es vorgesehen, dass das Annotieren umfasst, weitere Einstellungen zur Wiedergabe des Testfahrtszenarios oder andere zusätzliche Informationen hinzuzufügen. In einer Ausführungsform ist es vorgesehen, dass die Benutzerschnittstelle der Konfigurationseinheit durch die Vorrichtung zum Darstellen einer virtuellen Szene realisiert ist, mit der direkt eine Auswahl bzw. Annotation der anzuzeigenden Testfahrtszenario-Daten möglich ist. In einer Ausführungsform ermöglicht die Konfigurationseinheit auch, weitere Informationen zu den Testfahrtszenarien abzurufen und durch Annotation den Testfahrtszenario-Daten hinzuzufügen, beispielsweise historische Daten, besondere Ereignisse oder Informationen über eine Testkampagne, zu der die Testfahrt gehört. Darüber hinaus ist es in einer Ausführungsform vorgesehen, bei einem Testfahrtszenario mit mehreren Fahrzeugen, beispielsweise einer Flotte miteinander vernetzter Fahrzeuge, eines als Testfahrzeug auswählen zu können.

Die Testfahrtszenario-Daten werden über die Datenempfangsschnittstelle bzw. mehrere Datenempfangsschnittstellen an die Datenempfangseinheit der Steuervorrichtung übergeben. Deren Ausgestaltung ist von den jeweiligen Datenquellen bestimmt. Sensoren liefern vorzugsweise bereits Sensorsignale in digitaler Darstellung. Analoge Sensorsignale werden ggf. von der Datenempfangseinheit in digitale Signale konvertiert. Sind die Daten über weitere Datenbanken verfügbar, auf die über eine drahtlose oder drahtgebundene Verbindung zugegriffen werden kann, ist jeweils eine entsprechend geeignete Schnittstelle vorgesehen.

Über die Datenausgabeschnittstelle der Datenausgabeeinheit der Steuervorrichtung werden die vom Benutzer durch dessen Annotation zur Ausgabe ausgewählten auszugebenden Testfahrtszenario-Daten an die Vorrichtung zum Darstellen einer virtuellen Szene übergeben. Dabei kann vorgesehen sein, dass entsprechende virtuelle Repräsentationen von Objekten, auf die die auszugebenden Testfahrtszenario-Daten abgebildet werden, beispielsweise eine virtuelle Repräsentation zumindest des Testfahrzeugs, ggf. mit zu testender Fahrzeugkomponente, sowie der anderen Verkehrsteilnehmer, von der Vorrichtung zum Darstellen einer virtuellen Szene berechnet werden. In einer anderen Ausführungsform ist es vorgesehen, dass bereits die Steuereinheit beim Speichern bzw. Ablegen der empfangenen Testfahrtszenario-Daten entsprechende Zusatzinformationen assoziiert und ebenfalls in der Datenbank ablegt, so dass die auszugebenden Testfahrtszenario-Daten diese bereits umfassen.

Die Datenempfangseinheit, die Konfigurationseinheit und die Datenausgabeeinheit der Steuervorrichtung sind entweder als gemeinsames Modul realisiert oder weisen Schnittstellen auf, um miteinander kommunizieren zu können bzw. weisen zumindest eine Schnittstelle zum Schreib- bzw. Lesezugriff auf den Datenbankspeicher auf.

Das Testfahrtszenario-Datenbanksystem für realitätsnahe virtuelle Testfahrtszenarien stellt eine Möglichkeit zur Verfügung, unterschiedliche eine reale Testfahrt charakterisierende Daten sowohl des Testfahrzeugs bzw. der zu testenden Fahrzeugkomponente zusammen mit die Umgebungsbedingungen während der Testfahrt charakterisierenden Daten gemeinsam zu erfassen und in einer Datenbank abzulegen, so dass eine realitätsnahe virtuelle Testfahrt anhand der gespeicherten Daten rekonstruiert werden kann.

Indem Testfahrtszenario-Datensätze für verschiedene Testfahrten in einer gemeinsamen Datenbank zur Verfügung stehen, aus denen der Benutzer die anzuzeigenden Daten für das anzuzeigende virtuelle Testfahrtszenario auswählen und bearbeiten kann, können gezielt Zusammenhänge und Abhängigkeiten zwischen den Parametern der Testfahrtszenarien untersucht werden und nicht nur einzelne Begebenheiten, z.B. Unfälle, für sich betrachtet werden, sondern auch komplexe Abhängigkeiten in umfangreichen Szenarien erkannt und analysiert werden. Zudem können beispielsweise aussagekräftigere Auswertungen von Testfahrten durch Befragung der Testfahrer während einer "Wiederholung" von Fahrtsituationen in dem virtuellen Testfahrtszenario gewonnen werden, die dann beispielsweise mit demselben Testfahrer in veränderten Szenarien überprüft werden können. Handelt es sich um ein autonom fahrendes Fahrzeug, können die Passagiere zu der Testfahrt befragt werden.

In einer Ausführungsform umfasst die Vorrichtung zum Darstellen einer virtuellen Szene nicht nur Möglichkeiten, ein Testfahrtszenario anzuzeigen und damit zu interagieren, sondern weist eine Fahrsimulatorvorrichtung auf oder ist mit dieser verbunden, mit der beispielsweise die virtuelle Repräsentation des Testfahrzeugs in einer virtuellen Testfahrt von einem Benutzer der Fahrsimulatorvorrichtung durch das Testfahrtszenario gesteuert werden kann, so dass Reaktionen des Testfahrers auf Änderungen am Testfahrtszenario, einschließlich der virtuellen Repräsentation des Testfahrzeugs, untersucht werden können.

Das beschriebene Testfahrtszenario-Datenbanksystem ermöglicht es, ganze Testfahrtszenarien oder ausgewählte Abschnitte davon bzw. die dafür aufgezeichneten Daten der realen Testumgebung und des realen Testfahrzeugs zu speichern, inklusive der Bewegungen bzw. der Daten, aus denen die Bewegung rekonstruiert werden kann, z.B. Positionen über der Zeit, so dass die reale Testfahrt virtuell wiederholt werden kann bzw. die reale Testumgebung virtuell modelliert werden kann. Dadurch, dass nicht nur eine Testfahrt bzw. eine Testumgebung abgespeichert werden, sondern viele, können ganze Szenarien bzw. Teile davon verglichen werden und Teile ausgewählt werden, damit bestimmte Situationen, die beispielsweise kritisch sind oder in denen sich das Fahrzeug bzw. die zu testende Fahrzeugkomponente unerwartet verhalten hat, bei weiteren Entwicklungen von vorneherein berücksichtigt werden oder auch bei weiteren virtuellen Testfahrten berücksichtigt werden können, beispielsweise bei Durchführung einer virtuellen Benutzerklinik ("customer clinic" bzw. "car clinic"), bei der Testpersonen das neue Fahrzeug bzw. die neue Fahrzeugkomponente in einer virtuellen 3D-Welt testen.

In einer Ausführungsform des Testfahrtszenario-Datenbanksystems umfassen die empfangenen Testfahrtszenario-Daten zumindest Positionsdaten des ersten Testfahrzeugs zu einer Mehrzahl von Zeitpunkten oder kontinuierlich zwischen einem zugehörigen Beginn und einem zugehörigen Ende einer jeweiligen Testfahrt. Der Begriff "zwischen" kann dabei auch die Zeitpunkte des Beginns und des Endes der Testfahrt umfassen. Die Positionsdaten sind Werte eines Fahrtparameters und können beispielsweise mit Hilfe des globalen Positionsbestimmungssystems GPS ermittelt werden. Auf diese Weise kann der genaue Streckenverlauf der Testfahrt ermittelt und für eine Generierung eines entsprechenden virtuellen Testfahrtszenarios gespeichert werden. Wird zusätzlich jeweils der Messzeitpunkt erfasst, ist auch der Verlauf der Geschwindigkeit des ersten Testfahrzeugs nachvollziehbar. Hierzu können die Testfahrtszenario-Daten Zeitinformationen umfassen, beispielsweise eine universelle Zeitangabe, die von einer Borduhr des Testfahrzeugs bestimmt wird.

In einer weiteren Ausführungsform umfassen die empfangenen Testfahrtszenario-Daten Werte zumindest eines weiteren Fahrtparameters des ersten Testfahrzeugs zu der Mehrzahl von Zeitpunkten oder kontinuierlich zwischen dem zugehörigen Beginn und dem zugehörigen Ende der jeweiligen Testfahrt. Dabei handelt es sich z.B. um die Anzahl und/oder das Ausmaß der Lenkbewegungen, Geschwindigkeit und/oder Beschleunigung des Fahrzeugs, Gier, Neigung, den Zustand der Fahrzeugscheinwerfer, des Scheibenwischers, den gewählten Gang und/oder Schaltzeitpunkt etc. Die gemessenen Werte des oder der Fahrtparameter werden entweder drahtlos an die Dateneingabeeinheit der Steuervorrichtung übermittelt oder von dem ersten Testfahrzeug aufgezeichnet und später an die Dateneingabeeinheit des Testfahrtszenario-Datenbanksystems übermittelt. Das Erfassen eines oder mehrerer weiterer Fahrtparameter ermöglicht eine verbesserte realitätsnahe Rekonstruktion der Testfahrt in einem virtuellen Testfahrtszenario. Ebenso können RCP (Rapid Control Prototyping) Signale oder andere, über den Fahrzeugbus (z.B. CAN (Controller Area Network)) gesendete Signale als Bestandteil der Testfahrtszenario-Daten an die Steuervorrichtung gesendet oder zur späteren Übertragung zunächst in einem Speicher des ersten Testfahrzeugs abgelegt werden.

In einer bevorzugten Ausführungsform umfassen die empfangenen Testfahrtszenario-Daten Umgebungsdaten eines Umgebungsbereichs um die Position des ersten Testfahrzeugs. In einer Ausführungsform ist der Umgebungsbereich beispielsweise durch einen bestimmten Umkreis um die Position des Testfahrzeugs festgelegt. Umgebungsdaten können z.B. Topografiedaten oder Infrastrukturinformationen, beispielsweise Positionen und Dimensionen von Objekten, z.B. Positionen von Ampeln und anderen Verkehrszeichen, Verlauf und Breite von Straßen, ggf. Straßenneigungen, Höheninformationen und/oder Fahrbelagsinformationen, Position, Größe und Ausrichtung von Gebäuden, aber auch z.B. Wetterdaten für die Zeit der Testfahrt, Statusänderungen von Ampeln etc. sein. Je nach Verwendungszweck der Testfahrtszenario-Datenbank kann das Erfassen bestimmter Parameterwerte bzw. deren Verwendung bei der späteren Erzeugung eines zugehörigen virtuellen Testfahrtszenarios besonders vorteilhaft oder ggf. auch verzichtbar sein.

In einer beispielhaften Ausführungsform umfassen die Umgebungsdaten Daten aus zumindest einer Umgebungsinformationsdatenbank. Dabei ist die Umgebungsinformationsdatenbank bzw. sind die Umgebungsinformationsdatenbanken entweder mit dem Testfahrtszenario-Datenbanksystem verbunden bzw. verbindbar oder sind Teil des Testfahrtszenario-Datenbanksystems und mit der Steuervorrichtung z.B. über drahtgebundene oder drahtlose Verbindung(en) verbunden. Eine Anbindung kann beispielsweise über das Internet realisiert sein. Eine Umgebungsinformationsdatenbank kann beispielsweise ein Wetterdaten-Server oder Karteninformationsserver sein. Von dem Wetterdaten-Server können beispielsweise Informationen zur Temperatur, Luftfeuchtigkeit, Regen, Schnee, zu Sichtverhältnissen und/oder historische Wetterdaten abrufbar sein. Von dem Kartenserver sind zweidimensionale und/oder vorzugsweise dreidimensionale Karteninformationen der Umgebung der Fahrzeugposition abrufbar. Dies bietet den Vorteil, dass die Beschaffenheit der Umgebung auch in der zu erzeugenden virtuellen Umgebung darstellbar wird und somit beispielsweise Entscheidungen bzw. Verhalten des Fahrers nachvollziehbar werden, die mit der Beschaffenheit der Umgebung (beispielsweise fehlender Einsehbarkeit einer Kurve oder Straßenkreuzung) verbunden waren. Das Testfahrtszenario-Datenbanksystem ermöglicht es, die Auswirkung eines veränderten Umgebungsparameters beispielsweise durch Vergleich verschiedener Testfahrtszenarien, in denen bestimmte Umgebungsparameter unterschiedlich bzw. gleich waren, zu untersuchen.

In einer weiteren beispielhaften Ausführungsform umfassen die Umgebungsdaten weitere Daten, die von einem oder mehreren Sensoren des ersten Testfahrzeugs erfasst wurden. Zusätzlich zu oder anstatt des Erfassens von Umgebungsdaten, die in entsprechenden Umgebungsdatenbanken verfügbar sind, ist es in dieser Ausführungsform vorgesehen, Sensoren des ersten Testfahrzeugs, beispielsweise Signale bordeigener Radar-, Lidar- und oder Kamerasysteme, Regen- oder Temperatursensoren, zu nutzen, um neben Daten anderer Verkehrsteilnehmer auch weitere Umgebungsdaten wie Verkehrszeichen, Gebäude und/oder Wetterbedingungen zu erfassen. Dies bietet zumindest den Vorteil, Umgebungsdaten, unabhängig vom Bestehen einer Verbindung zur jeweiligen Umgebungsinformationsdatenbank jederzeit während der Testfahrt aufzeichnen zu können und dabei unabhängig von der Aktualität der jeweilig in der Umgebungsinformationsdatenbank verfügbaren Daten eindeutig zu der Testfahrt zugehörige Daten erfassen zu können. Sind Daten über eine Umgebungsinformationsdatenbank verfügbar, können anhand der Signalechos der jeweiligen Fahrzeugsensoren beispielsweise Positionsdaten korrigiert werden und nicht identifizierte Echoinformationen zugehörigen Objekten zugeordnet werden.

In einer Ausführungsform umfassen die empfangenen Testfahrtszenario-Daten Positionsdaten eines oder mehrerer anderer Verkehrsteilnehmer, beispielsweise anderer Fahrzeuge, Fußgänger oder Radfahrer während der Zeit der Testfahrt, d.h. mit Bewegungsinformationen, in einem Bereich um das Testfahrzeug. Hierzu werden beispielsweise Sensordaten von einem oder mehreren Sensoren, z.B. Bildsensoren, analysiert, die am ersten Testfahrzeug angebracht sind. Stattdessen oder zusätzlich kann zum Erfassen der Positionsdaten auch, falls verfügbar, eine direkte Kommunikation, beispielsweise unter Verwendung einer Fahrzeug-zu-Fahrzeug- bzw. Vehikel-zu-Vehikel (V2V)-Kommunikationsverbindung oder einer Infrastruktur-zu-Fahrzeug (I2V)-Kommunikationsverbindung (beispiels-weise Ampel-zu-Fahrzeug) oder einer Fußgänger-zu-Fahrzeug (P2V)-Kommunikationsverbindung erfolgen. Positionsdaten von Fußgängern werden dabei beispielsweise über deren Smartphone erfasst. Informationen über andere Verkehrsteilnehmer und die Verkehrssituation können auch von Verkehrsinformationssystemen und -datenbanken bezogen werden, beispielsweise die Verkehrsdichte, Position eines Staus oder einer Unfallstelle oder Informationen über den Verkehrsfluss, beispielsweise Ampelzustände oder Ampelphasen.

In einer Ausführungsform umfasst die erste zu testende Fahrzeugkomponente eine Steuerungssoftware, und der eine oder die mehreren Parameter bzw. zumindest einer dieser Parameter der ausgegebenen Testfahrtszenario-Daten sind Parameter der Steuerungssoftware. Auf diese Weise können auch Veränderungen an einer Steuerungssoftwarekomponente überprüft und validiert werden.

In einer weiteren Ausführungsform des Testfahrtszenario-Datenbanksystems ist die Datenempfangseinheit dazu eingerichtet, Testfahrtszenario-Daten auch von realen Testfahrten zumindest eines zweiten Testfahrzeugs, das zumindest die erste oder eine weitere zu testende Fahrzeugkomponente aufweist, zu empfangen und in dem Datenbankspeicher zu speichern. Dies bietet den Vorteil, dass beispielsweise Testfahrten mit unterschiedlichen Testfahrzeugen, aber der gleichen oder einer ähnlichen zu testende Fahrzeugkomponente von dem Testfahrtszenario-Datenbanksystem erfasst werden können.

In einer beispielhaften Ausführungsform ist die Datenempfangseinheit dazu eingerichtet ist, die Testfahrtszenario-Daten von gleichzeitig stattfindenden realen Testfahrten des ersten und des zweiten Testfahrzeugs zu empfangen und in dem Datenbankspeicher zu speichern. Auf diese Weise können auch komplexere Verkehrssituationen für ein realitätsnahes virtuelles Testfahrtszenario gespeichert werden, beispielsweise um die Abhängigkeiten der Fahrzeuge untereinander oder von Fahrzeugflotten analysieren zu können, die z.B. über eine V2V-Kommunikationsverbindung miteinander Daten austauschen. Zur Steuereinheit des Datenbanksystems gelangen die Daten entweder von jedem der Testfahrzeuge separat, oder alle Daten werden an das erste Testfahrzeug übertragen, das dann mit der Steuervorrichtung des Testfahrtszenario-Datenbanksystems kommuniziert.

In einer Ausführungsform ist die Datenempfangseinheit dazu eingerichtet, die Testfahrtszenario-Daten zumindest teilweise über eine drahtlose Verbindung zu empfangen. Dies betrifft insbesondere die Daten, die von Testfahrzeugen empfangen werden, kann aber beispielsweise auch Umgebungsinformationsdatenserver betreffen, die beispielsweise über ein Mobilfunknetz direkt erreichbar oder über das Internet oder anderes Kommunikationsnetz mit diesem verbunden sein können und z.B. als Server in einer Cloud realisiert sind.

In einer Ausführungsform umfasst die Vorrichtung zum Darstellen einer virtuellen Szene eine Analyseeinheit, die dazu eingerichtet ist, Abhängigkeiten zwischen unterschiedlichen Testfahrtszenario-Daten zu analysieren. Hierzu kann die Analyseeinheit beispielsweise Statistiken oder Tabellen erstellen, wie sich z.B. einer der Parameter verändert, wenn ein anderer geändert wird, so dass Abhängigkeiten und Zusammenhänge getrackt/verfolgt und ausgewertet werden können. So kann beispielsweise die Abhängigkeit des Treibstoffverbrauchs des Testfahrzeugs von der Anzahl anderer Verkehrsteilnehmer, dem Wetter o.ä. untersucht werden. Hierzu besteht z.B. die Möglichkeit, die virtuelle Szene zu manipulieren und die Auswirkungen zu erfassen und/oder Daten mehrerer Testfahrten mit unterschiedlichen Parametereinstellungen zu vergleichen. In einer Ausführungsform ist es vorgesehen, dass die Visualisierung des Ablaufs einer ausgewählten Testfahrt über Steuerungskommandos (z.B. Abspielen, Pause, Vorwärts, Rückwärts) gesteuert werden kann.

In einer beispielhaften Ausführungsform ist die Analyseeinheit dazu eingerichtet, in den Testfahrtszenario-Daten Änderungen, die zugeordnete Toleranzbereiche überschreiten, automatisch als besondere Ereignisse zu annotieren. Dies können beispielsweise plötzliche Lenkbewegungen oder Bremsvorgänge sein. Der Einsatz im Rahmen des Testfahrtszenario-Datenbanksystems ermöglicht eine detaillierte Analyse der Ursachen der Ereignisse. Führt man die Ereignisdetektion für mehrere Verkehrsteilnehmer in einem Testfahrtszenario durch oder vergleicht man unterschiedliche Testfahrten, lassen sich so (auch visuell) Zusammenhänge leichter erkennen. Beispielsweise könnte so analysiert und erkannt werden, dass, wenn die Geschwindigkeit über einem Schwellenwert liegt, ein bestimmtes überraschend auftauchendes Hindernis zu einer gefährlichen Lenkbewegung führt, bei angemessener Geschwindigkeit unterhalb des Schwellenwertes hingegen nicht.

In einer weiteren Ausführungsform ist die Analyseeinheit außerdem dazu eingerichtet, einen Lernalgorithmus anzuwenden, der es ermöglicht, aus der Abfolge der detektierten Ereignisse Kausalzusammenhänge zwischen Ereignissen festzustellen.

Gemäß einem weiteren Aspekt der Erfindung betrifft das erfindungsgemäße Verfahren ein Verfahren zum Untersuchen von Testfahrten mit einem Testfahrtszenario-Datenbanksystem für realitätsnahe virtuelle Testfahrt-szenarien. Es ist vorgesehen, dass das Verfahren mit einem Testfahrtszenario-Datenbanksystem gemäß einer der oben beschriebenen Ausführungsformen ausgeführt wird. Auf diese Weise werden die Vorteile und Besonderheiten des erfindungsgemäßen Testfahrtszenario-Datenbank-systems auch im Rahmen eines Verfahrens zum Untersuchen von Testfahrten mit einem Testfahrtszenario-Datenbanksystem umgesetzt.

Hierzu wird das Verfahren zum Untersuchen von Testfahrten mit einer Testfahrtszenario-Datenbanksystem für realitätsnahe virtuelle Testfahrt-szenarien umgesetzt, das zumindest eine Vorrichtung zum Darstellen einer virtuellen Szene, einen Datenbankspeicher und eine Steuervorrichtung zumindest mit einer Datenempfangseinheit mit einer oder mehreren Datenempfangsschnittstellen, einer Konfigurationseinheit mit zumindest einer Benutzer-Schnittstelle und einer Datenausgabeeinheit mit zumindest einer Datenausgabeschnittstelle aufweist.

Das Verfahren umfasst dabei zumindest, mit der Datenempfangseinheit Testfahrtszenario-Daten von einer Mehrzahl von realen Testfahrten zumindest eines ersten Testfahrzeugs, das zumindest eine erste zu testende Fahrzeugkomponente aufweist, zu empfangen und in dem Datenbank-speicher zu speichern, mit der Konfigurationseinheit zu Testfahrtszenario-Daten von zumindest einem Teil von zumindest einer der Mehrzahl von realen Testfahrten zumindest eine Annotation eines Benutzer des Testfahrtszenario-Datenbanksystems hinzuzufügen, mit der Datenausgabe-einheit Testfahrtszenario-Daten von zumindest dem Teil der zumindest einen von der Mehrzahl von realen Testfahrten, zu dem die Annotation hinzugefügt wurde, an die Vorrichtung zum Darstellen einer virtuellen Szene auszugeben und mit der Vorrichtung zum Darstellen einer virtuellen Szene die ausgegebenen Testfahrtszenario-Daten in einem virtuellen Szenario darzustellen, in dem einer oder mehrere Parameter der ausgegebenen Testfahrtszenario-Daten verändert werden können.

Weitere Vorteile der vorliegenden Erfindung sind aus der detaillierten Beschreibung und den Abbildungen ersichtlich. Die Erfindung wird nachstehend im Zusammenhang mit der folgenden Beschreibung von Ausführungsbeispielen mit Bezug auf die begleitenden Zeichnungen näher erläutert. Es zeigen:
- Fig. 1: eine schematische Darstellung eines Beispiels eines Testfahrtszenario-Datenbanksystems für realitätsnahe virtuelle Testfahrtszenarien gemäß einer Ausführungsform der Erfindung; und
- Fig. 2: eine schematische Darstellung eines Beispiels eines Verfahrens zum Untersuchen von Testfahrten mit einem Testfahrtszenario-Datenbanksystem gemäß einer weiteren Ausführungsform der Erfindung.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der vorstehend und nachstehend beschriebenen verschiedenen beispielhaften Ausführungsformen miteinander kombiniert werden können, sofern nicht spezifisch anders angegeben. Die Beschreibung ist deshalb nicht in einschränkendem Sinne aufzufassen, und der Schutzumfang der vorliegenden Erfindung wird durch die angefügten Ansprüche definiert.

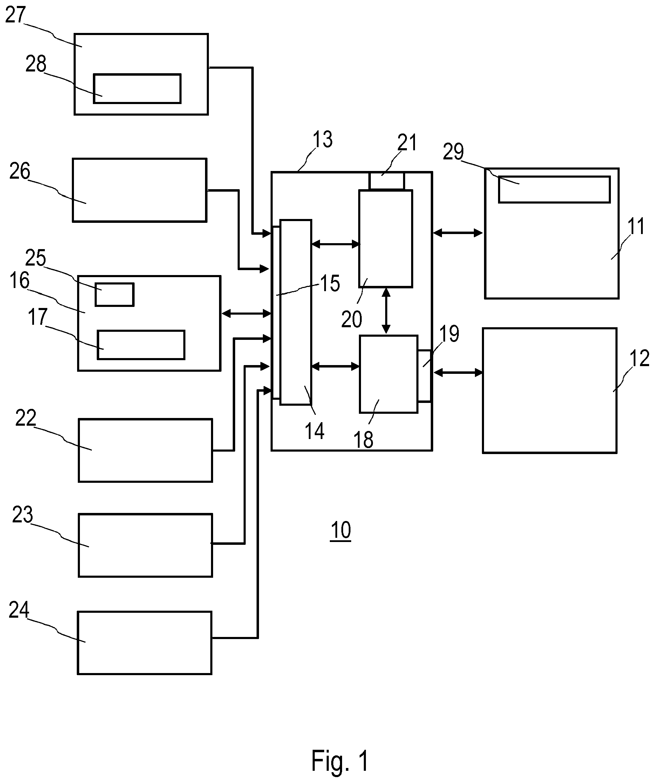

In Fig. 1 ist ein Beispiel eines Testfahrtszenario-Datenbanksystems für realitätsnahe virtuelle Testfahrtszenarien gemäß einer Ausführungsform der Erfindung schematisch dargestellt. Das gezeigte Testfahrtszenario-Datenbanksystem 10 für realitätsnahe virtuelle Testfahrtszenarien umfasst eine Vorrichtung 11 zum Darstellen einer virtuellen Szene. Diese weist zumindest eine programmierbare Vorrichtung und ein Anzeigemittel bzw. Display auf, so dass basierend auf zur Anzeige ausgewählten Testfahrtszenario-Daten ein virtuelles Testfahrtszenario erzeugt und auf dem Anzeigemittel, beispielsweise einem Display, Touchscreen oder Head-Mounted-Display, angezeigt werden kann. Die Vorrichtung zum Darstellen einer virtuellen Szene kann hierzu insbesondere auch einen Fahrsimulator umfassen bzw. in diesem enthalten sein.

Zudem weist das gezeigte Testfahrtszenario-Datenbanksystem 10 einen Datenbankspeicher 12 auf, in dem Testfahrtszenario-Daten, ggf. mit assoziierten zusätzlichen, durch einen Benutzer, beispielsweise einen Entwicklungsingenieur, erzeugten oder automatisch generierten Annotationen in einer Testfahrtszenario-Datenbank gespeichert werden können.

Außerdem weist das gezeigte Testfahrtszenario-Datenbanksystem 10 eine zentrale Steuervorrichtung 13 auf, die mit der Vorrichtung 11 zum Darstellen einer virtuellen Szene, dem Datenbankspeicher 12, einem ersten Testfahrzeug 16 sowie allen weiteren Komponenten des Systems kommunikativ verbunden ist bzw. zur Datenübertragung verbunden werden kann. Die Steuervorrichtung weist eine Datenempfangseinheit 14 mit einer Datenempfangsschnittstelle 15, eine Konfigurationseinheit 18 mit einer Benutzer-Schnittstelle 19 und eine Datenausgabeeinheit 20 mit einer Datenausgabeschnittstelle 21 auf.

Die Datenempfangseinheit 14 empfängt Testfahrtszenario-Daten von einer Mehrzahl von realen Testfahrten eines ersten Testfahrzeugs 16. In Fig. 1 ist gezeigt, dass das erste Testfahrzeug eine erste zu testende Fahrzeugkomponente 17 aufweist. Hierbei kann es sich beispielsweise um zu testende Steuerungssoftware des ersten Testfahrzeugs 16 handeln. Die Steuervorrichtung 13 speichert die von der Datenempfangseinheit 14 empfangenen Testfahrtszenario-Daten in dem Datenbankspeicher 12.

Bei den empfangenen Testfahrtszenario-Daten handelt es sich zumindest um Positionsdaten des ersten Testfahrzeugs 16, die für jede der Testfahrten kontinuierlich oder zu bestimmten Messzeitpunkten, z.B. alle 0,1 Sekunden zwischen Start und Ende einer Testfahrt ermittelt werden. Hierzu verfügt das gezeigte erste Testfahrzeug 16 beispielsweise über einen GPS-Empfänger.

In der gezeigten Ausführungsform des Testfahrtszenario-Datenbanksystems 10 ist die Steuervorrichtung 13 außerdem mit mehreren Umgebungsinformationsdatenbanken verbunden. Eine erste Umgebungsinformationsdatenbank 22 ist eine Wetterinformationsdatenbank, von der die Steuervorrichtung anhand der vom ersten Testfahrzeug 16 während einer Testfahrt übermittelten Positionsdaten zugehörige Wetterdaten abfragt. Eine zweite Umgebungsinformationsdatenbank 23 ist eine Karteninformationsdatenbank, vorzugsweise mit Informationen, um eine dreidimensionale Darstellung der Umgebung zu ermöglichen, von der die Steuervorrichtung 13 Karteninformationsdaten zu einem Umgebungsbereich um die jeweilige Position des ersten Testfahrzeugs ermitteln zu können. Außerdem ist die Steuervorrichtung 13 mit einer dritten Umgebungsinformationsdatenbank 24 verbunden, von der die Verkehrsinformationsdaten für die Umgebung der Position des ersten Fahrzeugs abgerufen werden.

Das erste Testfahrzeug 16 verfügt zudem über Sensoren 25, z.B. Radar, Lidar und/oder Bildsensoren, mit denen Informationen über die Umgebung, insbesondere Objekte in der Umgebung, erfasst werden. Diese werden als weitere Testfahrtszenario-Daten an die Datenempfangseinheit 14 der Steuervorrichtung 13 übertragen.

In der gezeigten Ausführungsform kann die Steuerungsvorrichtung 13 außerdem zumindest Positionsdaten eines oder mehrerer weiterer Verkehrsteilnehmer 26 erfassen, sowie Testfahrtszenario-Daten zumindest eines zweiten Testfahrzeugs 27 mit einer zweiten zu testenden Fahrzeugkomponente 28.

Die Konfigurationseinheit 18 verfügt über ein Benutzer-Interface bzw. eine Benutzer-Schnittstelle 19, über die der Benutzer des Testfahrtszenario-Datenbanksystems 10 auf empfangene und in dem Datenbankspeicher 12 gespeicherte Testfahrtszenario-Daten zugreifen und Annotationen hinzufügen kann. Eine Annotation ist insbesondere die Markierung der Testfahrtszenario-Daten einer oder mehrerer realer Testfahrten bzw. eines Abschnittes oder Teils davon zur Auswahl von mit der Vorrichtung zum Erzeugen einer virtuellen Szene 11 anzuzeigenden Daten.

Die Datenausgabeeinheit 20 ist dazu eingerichtet, über die Konfigurationseinheit 18 ausgewählte Testfahrtszenario-Daten von realen Testfahrten, zu denen eine Annotation hinzugefügt wurde, an die Vorrichtung 11 zum Darstellen einer virtuellen Szene auszugeben.

Die Vorrichtung 11 zum Darstellen einer virtuellen Szene erzeugt auf der Basis der empfangenen Testszenario-Daten ein virtuelles Testfahrtszenario, das wiederum einem Benutzer der Vorrichtung ermöglicht, Parameter der ausgegebenen Testfahrtszenario-Daten verändern zu können. Der Benutzer der Vorrichtung 11 kann derselbe Benutzer sein, der über die Konfigurationseinheit 18 die anzuzeigende Szene konfiguriert hat. Es kann sich aber beispielsweise auch um eine Testperson, beispielsweise im Rahmen einer Testreihe für das Testfahrzeug handeln.

In der gezeigten Ausführungsform verfügt die Vorrichtung 11 zum Darstellen einer virtuellen Szene zudem über eine Analyseeinheit 29, mit der Abhängigkeiten zwischen unterschiedlichen Testfahrtszenario-Daten analysiert werden können und die dazu eingerichtet ist, in den Testfahrtszenario-Daten Änderungen, die zugeordnete Toleranzbereiche überschreiten, automatisch als besondere Ereignisse zu annotieren. Diese Annotationen werden an die Steuerungsvorrichtung 13 übertragen, die diese in dem Datenbankspeicher 12 ablegt.

Die in Fig. 1 gezeigte Aufteilung in einen Block für die Vorrichtung 11 zum Darstellen einer virtuellen Szene und einen weiteren für die Steuervorrichtung 13 ist nur eine mögliche Ausführungsform. In anderen Ausführungsformen sind beispielsweise die Steuervorrichtung 13 und die Vorrichtung 11 zum Darstellen einer virtuellen Szene oder die Analyseeinheit 29 und die Konfigurationseinheit 18 als gemeinsames Modul verwirklicht.

Das Aufzeichnen von Testfahrtszenario-Daten für eine Rekonstruktion eines realitätsnahen virtuellen Testfahrtszenarios während einer realen Testfahrt unter Verwendung des Testfahrtszenario-Datenbanksystems 10 kann beispielsweise folgendermaßen ablaufen:
Nach dem Start der realen Testfahrt wird für eine Abfolge von Messzeitpunkten, beispielsweise alle 0,1 Sekunden, die Position des ersten Testfahrzeugs mit Hilfe von GPS bestimmt und an die Steuervorrichtung 13 übertragen, sowie von der zweiten Umgebungsinformationsdatenbank 23 eine 3D-Karte von einer Umgebung der Position des ersten Testfahrzeugs 16 abgerufen. Die Karte enthält beispielsweise Straßen, Verkehrsinfrastruktur, Gebäude und Verkehrszeichen.

Dazu werden die Positionen anderer Verkehrsteilnehmer 26 ermittelt, z.B. über geeignete Datenbanken wie der dritten Umgebungsinformationsdatenbank 24, die Verkehrsinformationen zur Verfügung stellt, mit den bordeigenen Sensoren 25 des ersten Testfahrzeugs 16 ermittelten Informationen oder beispielsweise über Fahrzeug-zu-Fahrzeug-Kommunikation von anderen Fahrzeugen, beispielsweise des zweiten Testfahrzeugs 27 oder Smartphone-Ortung von Fußgängern, Radfahrern oder Fahrern anderer Fahrzeuge erhaltenen Positionsinformationen. Hierbei ist es vorgesehen, die über Datenbanken oder Smartphone-Ortung erhaltenen Positionsinformationen mit Ortungsinformationen aufgrund der durch Auswertung der von den Sensoren 25 des ersten Testfahrzeugs 16 ermittelten Objekt-Positionsinformationen abzugleichen und zu korrigieren. Bleiben Objekte zwar geortet, aber nicht identifiziert, wird ein entsprechender Hinweis zu den Testfahrtszenario-Daten hinzugefügt.

Um ein realistischeres Rendern der Szenarios durch die Vorrichtung 11 zum Darstellen einer virtuellen Szene zu ermöglichen, werden in einer Ausführungsform zusätzlich die Orientierung der Objekte, deren nächste Position und deren Geschwindigkeit ermittelt und abgelegt. Außerdem werden von der ersten Umgebungsinformationsdatenbank 22, die Wetterdaten zur Verfügung stellt, zugehörige Wetterdaten abgerufen, damit diese beim Darstellen der der virtuellen Szene verwendet werden können.

Überträgt das Testfahrzeug 16 weitere Daten, beispielsweise, ob das Fahrlicht eingeschaltet ist oder die Türen geschlossen sind, werden auch diese Informationen erfasst, um diese dann beim Darstellen des virtuellen Testfahrtszenarios berücksichtigen zu können. Zusätzlich werden, sofern verfügbar, auch Verkehrszeichen, insbesondere der Verlauf der Ampelzustände erfasst.

Dabei ist zu beachten, dass die Erfassung der Daten der Testfahrt und deren Übertragung an die Steuervorrichtung entweder direkt während der Testfahrt erfolgen kann, oder zu einem späteren Zeitpunkt, wenn eine Datenverbindung hergestellt werden kann, erfolgt. So können die Daten des ersten Testfahrzeugs 16 zunächst beispielsweise in einem Datenaufzeichnungsgerät an Bord des Testfahrzeugs 16 aufgezeichnet werden und die zugehörigen Umgebungsdaten von den Umgebungsinformationsdatenbanken 22, 23, 24 später abgerufen werden, wenn die Positionsdaten des ersten Testfahrzeugs 16 an die Steuervorrichtung 13 übertragen worden sind.

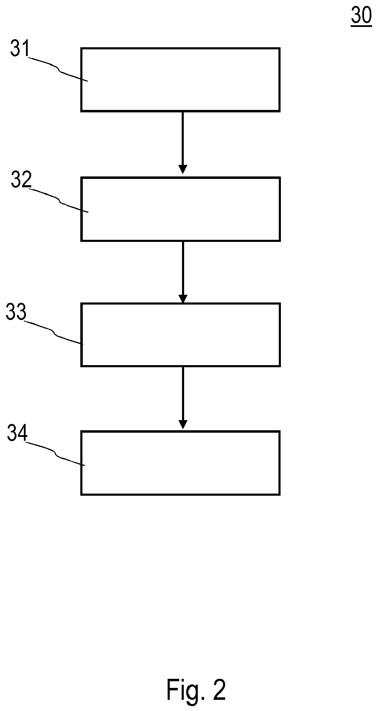

In Fig. 2 ist ein Beispiel eines Verfahrens zum Untersuchen von Testfahrten mit einem Testfahrtszenario-Datenbanksystem für realitätsnahe virtuelle Testfahrtszenarien gemäß einer weiteren Ausführungsform der Erfindung schematisch dargestellt.

Das Verfahren 30 zum Untersuchen von Testfahrten mit einem Testfahrt-szenario-Datenbanksystem für realitätsnahe virtuelle Testfahrtszenarien wird beispielsweise mit einem Testfahrtszenario-Datenbanksystem durchgeführt, wie es in Fig. 1 gezeigt ist. Jedenfalls weist das geeignete Testfahrtszenario-Datenbanksystem zumindest eine Vorrichtung zum Darstellen einer virtuellen Szene, einen Datenbankspeicher und eine Steuervorrichtung zumindest mit einer Datenempfangseinheit mit einer oder mehreren Datenempfangsschnittstellen, einer Konfigurationseinheit mit zumindest einer Benutzer-Schnittstelle und einer Datenausgabeeinheit mit zumindest einer Datenausgabeschnittstelle auf.

In einem ersten Verfahrensschritt 31 ist es vorgesehen, mit der Datenempfangseinheit Testfahrtszenario-Daten von einer Mehrzahl von realen Testfahrten zumindest eines ersten Testfahrzeugs, das zumindest eine erste zu testende Fahrzeugkomponente aufweist, zu empfangen und in dem Datenbank-speicher zu speichern.

In einem zweiten Verfahrensschritt 32 ist es vorgesehen, mit der Konfigurationseinheit zu Testfahrtszenario-Daten von zumindest einem Teil von zumindest einer der Mehrzahl von realen Testfahrten zumindest eine Annotation eines Benutzers des Testfahrtszenario-Datenbanksystems hinzuzufügen.

In einem dritten Verfahrensschritt 33 ist es vorgesehen, mit der Datenausgabeeinheit Testfahrtszenario-Daten von zumindest dem Teil der zumindest einen von der Mehrzahl von realen Testfahrten, zu dem die Annotation hinzugefügt wurde, an die Vorrichtung zum Darstellen einer virtuellen Szene auszugeben.

In einem vierten Verfahrensschritt 34 ist es vorgesehen, mit der Vorrichtung zum Darstellen einer virtuellen Szene die ausgegebenen Testfahrtszenario-Daten in einem virtuellen Szenario darzustellen, in dem einer oder mehrere Parameter der ausgegebenen Testfahrtszenario-Daten verändert werden können.

Die Figuren sind nicht notwendigerweise detailgetreu und maßstabsgetreu und können vergrößert oder verkleinert dargestellt sein, um einen besseren Überblick zu bieten. Daher sind hier offenbarte funktionale Einzelheiten nicht einschränkend zu verstehen, sondern lediglich als anschauliche Grundlage, die dem Fachmann auf diesem Gebiet der Technik Anleitung bietet, um die vorliegende Erfindung auf vielfältige Weise einzusetzen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden. Wird beispielsweise eine Zusammensetzung beschrieben, dass sie die Komponenten A, B und/oder C, enthält, kann die Zusammensetzung A alleine; B alleine; C alleine; A und B in Kombination; A und C in Kombination; B und C in Kombination; oder A, B, und C in Kombination enthalten.

Obwohl die Erfindung durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Testfahrtszenario-Datenbanksystem
- 11: Vorrichtung zum Darstellen einer virtuellen Szene
- 12: Datenbankspeicher
- 13: Steuervorrichtung
- 14: Datenempfangseinheit
- 15: Datenempfangsschnittstelle
- 16: erstes Testfahrzeug
- 17: erste zu testende Fahrzeugkomponente
- 18: Konfigurationseinheit
- 19: Benutzerschnittstelle
- 20: Datenausgabeeinheit
- 21: Datenausgabeschnittstelle
- 22: erste Umgebungsinformationsdatenbank
- 23: zweite Umgebungsinformationsdatenbank
- 24: dritte Umgebungsinformationsdatenbank
- 25: Sensor
- 26: anderer Verkehrsteilnehmer
- 27: zweites Testfahrzeug
- 28: zweite zu testende Fahrzeugkomponente
- 29: Analyseeinheit
- 30: Verfahren zum Untersuchen von Testfahrten
- 31: erster Verfahrensschritt
- 32: zweiter Verfahrensschritt
- 33: dritter Verfahrensschritt
- 34: vierter Verfahrensschritt

## Patentansprüche

1. Testfahrtszenario-Datenbanksystem (10) für realitätsnahe virtuelle Testfahrtszenarien, umfassend
eine Vorrichtung (11) zum Darstellen einer virtuellen Szene,
einen Datenbankspeicher (12) und
eine Steuervorrichtung (13) zumindest mit
- einer Datenempfangseinheit (14) mit einer oder mehreren Datenempfangsschnittstellen (15), dazu eingerichtet, Testfahrtszenario-Daten von einer Mehrzahl von realen Testfahrten zumindest eines ersten Testfahrzeugs (16), das zumindest eine erste zu testende Fahrzeugkomponente (17) aufweist, zu empfangen und in dem Datenbankspeicher (12) zu speichern;
- einer Konfigurationseinheit (18) mit zumindest einer Benutzer-Schnittstelle (19), dazu eingerichtet, dass über diese ein Benutzer des Testfahrtszenario-Datenbanksystems (10) zu Testfahrtszenario-Daten von zumindest einem Teil von zumindest einer der Mehrzahl von realen Testfahrten zumindest eine Annotation hinzufügen kann; und
- einer Datenausgabeeinheit (20) mit zumindest einer Datenausgabeschnittstelle (21), dazu eingerichtet, Testfahrtszenario-Daten von zumindest dem Teil der zumindest einen von der Mehrzahl von realen Testfahrten, zu dem die Annotation hinzugefügt wurde, an die Vorrichtung (11) zum Darstellen einer virtuellen Szene auszugeben, die dazu eingerichtet ist, die ausgegebenen Testfahrtszenario-Daten in einem virtuellen Szenario darzustellen, in dem einer oder mehrere Parameter der ausgegebenen Testfahrtszenario-Daten verändert werden können.

2. Testfahrtszenario-Datenbanksystem nach Anspruch 1, wobei die empfangenen Testfahrtszenario-Daten zumindest Positionsdaten des ersten Testfahrzeugs (16) zu einer Mehrzahl von Zeitpunkten oder kontinuierlich zwischen einem zugehörigen Beginn und einem zugehörigen Ende einer jeweiligen Testfahrt umfassen.

3. Testfahrtszenario-Datenbanksystem nach Anspruch 2, wobei die empfangenen Testfahrtszenario-Daten Werte zumindest eines weiteren Fahrtparameters des ersten Testfahrzeugs (16) zu der Mehrzahl von Zeitpunkten oder kontinuierlich zwischen dem zugehörigen Beginn und dem zugehörigen Ende der jeweiligen Testfahrt umfassen.

4. Testfahrtszenario-Datenbanksystem nach Anspruch 2 oder Anspruch 3, wobei die empfangenen Testfahrtszenario-Daten Umgebungsdaten eines Umgebungsbereichs um die Position des ersten Testfahrzeugs (16) umfassen.

5. Testfahrtszenario-Datenbanksystem nach Anspruch 4, wobei die Umgebungsdaten Daten aus zumindest einer Umgebungsinformationsdatenbank (22, 23, 24) umfassen.

6. Testfahrtszenario-Datenbanksystem nach Anspruch 4 oder Anspruch 5, wobei die Umgebungsdaten weitere Daten umfassen, die von einem oder mehreren Sensoren (25) des ersten Testfahrzeugs (16) erfasst wurden.

7. Testfahrtszenario-Datenbanksystem nach einem der vorhergehenden Ansprüche, wobei die empfangenen Testfahrtszenario-Daten Positionsdaten eines oder mehrerer anderer Verkehrsteilnehmer (26) umfasst.

8. Testfahrtszenario-Datenbanksystem nach einem der vorhergehenden Ansprüche, wobei die erste zu testende Fahrzeugkomponente (17) eine Steuerungssoftware umfasst und der eine oder die mehreren Parameter der ausgegebenen Testfahrtszenario-Daten Parameter der Steuerungssoftware sind.

9. Testfahrtszenario-Datenbanksystem nach einem der vorhergehenden Ansprüche, wobei die Datenempfangseinheit (14) dazu eingerichtet ist, Testfahrtszenario-Daten auch von realen Testfahrten zumindest eines zweiten Testfahrzeugs (27), das zumindest die erste oder eine weitere zu testende Fahrzeugkomponente (28) aufweist, zu empfangen und in dem Datenbank-speicher (12) zu speichern.

10. Testfahrtszenario-Datenbanksystem nach Anspruch 9, wobei die Datenempfangseinheit (14) dazu eingerichtet ist, die Testfahrtszenario-Daten von gleichzeitig stattfindenden realen Testfahrten des ersten und des zweiten Testfahrzeugs (16, 27) zu empfangen und in dem Datenbankspeicher (12) zu speichern.

11. Testfahrtszenario-Datenbanksystem nach einem der vorhergehenden Ansprüche, wobei die Datenempfangseinheit (14) dazu eingerichtet ist, die Testfahrtszenario-Daten zumindest teilweise über eine drahtlose Verbindung zu empfangen.

12. Testfahrtszenario-Datenbanksystem nach einem der vorhergehenden Ansprüche, wobei die Vorrichtung (11) zum Darstellen einer virtuellen Szene eine Analyseeinheit (29) umfasst, die dazu eingerichtet ist, Abhängigkeiten zwischen unterschiedlichen Testfahrtszenario-Daten zu analysieren.

13. Testfahrtszenario-Datenbanksystem nach Anspruch 12, wobei die Analyseeinheit (29) dazu eingerichtet ist, in den Testfahrtszenario-Daten Änderungen, die zugeordnete Toleranzbereiche überschreiten, automatisch als besondere Ereignisse zu annotieren.

14. Verfahren (30) zum Untersuchen von Testfahrten mit einem Testfahrtszenario-Datenbanksystem für realitätsnahe virtuelle Testfahrtszenarien, das zumindest eine Vorrichtung zum Darstellen einer virtuellen Szene, einen Datenbankspeicher und eine Steuervorrichtung zumindest mit einer Datenempfangseinheit mit einer oder mehreren Datenempfangsschnittstellen, einer Konfigurationseinheit mit zumindest einer Benutzer-Schnittstelle und einer Datenausgabeeinheit mit zumindest einer Datenausgabeschnittstelle aufweist, wobei das Verfahren umfasst
- mit der Datenempfangseinheit Testfahrtszenario-Daten von einer Mehrzahl von realen Testfahrten zumindest eines ersten Testfahrzeugs, das zumindest eine erste zu testende Fahrzeugkomponente, aufweist, zu empfangen und in dem Datenbankspeicher zu speichern (31);
- mit der Konfigurationseinheit zu Testfahrtszenario-Daten von zumindest einem Teil von zumindest einer der Mehrzahl von realen Testfahrten zumindest eine Annotation eines Benutzers des Testfahrtszenario-Datenbanksystems hinzuzufügen (32);
- mit der Datenausgabeeinheit Testfahrtszenario-Daten von zumindest dem Teil der zumindest einen von der Mehrzahl von realen Testfahrten, zu dem die Annotation hinzugefügt wurde, an die Vorrichtung zum Darstellen einer virtuellen Szene auszugeben (33); und
- mit der Vorrichtung zum Darstellen einer virtuellen Szene die ausgegebenen Testfahrtszenario-Daten in einem virtuellen Szenario darzustellen (34), in dem einer oder mehrere Parameter der ausgegebenen Testfahrtszenario-Daten verändert werden können.
